# EUROPÄISCHE PATENTSCHRIFT

(11) **EP 3 700 801 B1**
(45) Veröffentlichungstag und Bekanntmachung des Hinweises auf die Patenterteilung: **30.03.2022**
(21) Anmeldenummer: 18795345.0
(22) Anmeldetag: 19.10.2018
(51) Int. Cl.: F16H 57/021, F16H 57/039, B62D 5/04, F16C 35/067

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 23.10.2017 DE 102017218897
(43) Veröffentlichungstag der Anmeldung: 02.09.2020
(73) Patentinhaber: thyssenkrupp Presta AG, 9492 Eschen (LI); thyssenkrupp AG, 45143 Essen (DE)
(72) Erfinder: VONIER, Felix, 6780 Schruns (AT)
(74) Vertreter: thyssenkrupp Intellectual Property GmbH
(86) Internationale Anmeldenummer: PCT/EP2018/078721
(87) Internationale Veröffentlichungsnummer: WO 2019/081368

(56) Entgegenhaltungen:
- DE-A1- 10 010 838
- DE-A1-102011 015 883
- DE-T2- 60 312 120
- KR-A- 20100 102 347
- US-A1- 2015 360 719
- US-A1- 2016 348 727

## Beschreibung

### Stand der Technik

Die Erfindung betrifft eine elektromechanische Hilfskraftlenkung für ein Kraftfahrzeug, umfassend eine von einem Elektromotor antreibbare Schneckenwelle, die mit einem mit einer Lenkwelle gekoppelten Schneckenrad kämmt, wobei die Schneckenwelle in einem Lager drehbar gelagert ist, welches zumindest einen in einer relativ zum Schneckenrad verlagerbaren Halterung angebrachten Lagerring aufweist, wobei der Grundkörper der Halterung als Exzenterhebel ausgebildet ist, der ein Schwenklager mit einer Schwenkachse aufweist, die einen Abstand zur Achse des Lagers hat.

Bei hilfskraftunterstützten Lenkungen von Kraftfahrzeugen wird zusätzlich zum manuellen Lenkmoment, welches vom Fahrer als Lenkbefehl über das eingangsseitig angebrachte Lenkrad in die Lenkwelle eingebracht wird, ein zusätzliches Hilfsmoment in den Lenkstrang eingekoppelt, um das manuelle Lenkmoment für einen Lenkeinschlag der Räder zu unterstützen.

In einer gattungsgemäßen elektromechanischen Hilfskraftlenkung wird das manuelle Lenkmoments mittels eines Drehmomentsensors erfasst, beispielsweise durch Messung der relativen Torsion eines zwischen einer Eingangs- und einer Ausgangswelle der Lenkwelle eingegliederten Drehstabs. Abhängig von dem gemessenen Lenkmoment wird in einer elektrischen Steuereinheit die erforderliche Hilfskraftunterstützung bestimmt, und ein elektrischer Stellantrieb entsprechend angesteuert. Der Stellantrieb weist einen Elektromotor zur Erzeugung eines Hilfsmoments auf, welches in die Lenkwelle eingekoppelt wird.

Die Einkopplung des Hilfsmoments erfolgt gattungsgemäß über ein Schneckengetriebe, welches eine mit der Motorwelle des Elektromotors gekuppelte Schneckenwelle aufweist, die in ein Schneckenrad eingreift. Das Schneckenrad ist drehfest mit der Lenkwelle verbunden, beispielsweise mit der Ausgangswelle, die üblicherweise mit dem Lenkritzel eines Lenkgetriebes verbunden ist, in dem das Lenkritzel in eine Zahnstange eingreift, welche eine Drehung der Lenkwelle in eine translatorische Bewegung von Spurstangen und dadurch in einen Lenkausschlag der gelenkten Räder umsetzt.

Um die Laufruhe zur erhöhen, und Geräuschbildung bei den durch die Lenkbewegungen verursachten Lastwechsel möglichst zu vermeiden, ist es bekannt, die Schneckenwelle in Richtung des Verzahnungseingriffs gegen das Schneckenrad elastisch vorzuspannen. Eine derartige Anordnung ist im Stand der Technik beispielsweise in der DE 10 2014 110 306 A1 beschrieben. Darin ist die Schneckenwelle an ihrem motorfernen Ende in einem Lager drehbar gelagert, welches in einer Halterung aufgenommen ist, in der ein Lagerring, der einen Außenteil des Lagers bildet, drehfest angebracht ist. Die Halterung ist derart verlagerbar in dem Schneckengetriebe angebracht, dass der Lagerring in Richtung gegen die Verzahnung des Schneckenrads bewegbar ist, wodurch die Schneckenwelle in einen spielfreien Verzahnungseingriff mit dem Schneckenrad vorgespannt werden kann. Als Vorspannelement kann beispielsweise eine Feder vorgesehen sein, welche an der Halterung angreift und die Schneckenwelle elastisch spielfrei gegen die Verzahnung des Schneckenrads andrückt.

In der bekannten Ausführung ist ein äußerer Lagerring des als Wälzlager ausgebildeten Lagers in eine Aufnahmeöffnung der Halterung eingesetzt und kraftschlüssig fixiert. Um dabei einen ausreichend festen Sitz zu erzeugen, ist es erforderlich, die Aufnahmeöffnung in sich elastisch auszubilden, oder ein elastisch nachgiebiges Zwischenelement zwischen Lagerring und Halterung einzufügen. Nachteilig daran ist die eingeschränkte Maßhaltigkeit, die relativ geringe Steifigkeit der Verbindung des Lagers mit der Halterung, und eine beeinträchtigte Langzeitstabilität, die zu unerwünschtem Spiel und Geräuschbildung führen kann. Außerdem ist die Montage aufwendig.

Eine gattungsgemäße Lenkung ist beispielsweise aus der DE 10 2011 015883 A1 bekannt.

Diese ist im Hinblick auf die erforderliche Maßhaltigkeit und Steifigkeit relativ aufwendig. Eine weitere gattungsgemäße Lenkung ist aus der KR20100102347 A bekannt.

Angesichts der vorangehend erläuterten Problematik ist es eine Aufgabe der vorliegenden Erfindung, eine Lenkung der eingangs genannten Art mit einer verbesserten Halterung anzugeben, die eine höhere Maßhaltigkeit und eine erhöhte Steifigkeit aufweist.

### Darstellung der Erfindung

Diese Aufgabe wird gelöst durch eine Hilfskraftlenkung gemäß Anspruch 1. Vorteilhafte Weiterbildungen ergeben sich aus den Unteransprüchen

Erfindungsgemäß wird für eine Hilfskraftlenkung für ein Kraftfahrzeug, umfassend eine von einem Elektromotor antreibbare Schneckenwelle, die mit einem mit einer Lenkwelle gekoppelten Schneckenrad kämmt, wobei die Schneckenwelle in einem Lager drehbar gelagert ist, welches zumindest einen in einer relativ zum Schneckenrad verlagerbaren Halterung angebrachten Lagerring aufweist, vorgeschlagen, dass die Halterung einen Grundkörper aus Kunststoff aufweist, welcher als Spritzgussteil an den Lagerring angespritzt ist.

Der Grundkörper der erfindungsgemäßen Halterung ist als Spritzgussteil aus thermoplastischem Kunststoff ausgebildet, beispielsweise Polypropylen (PP), Polyoxymethylen (POM) oder dergleichen, was eine rationelle, form- und maßgenaue Fertigung ermöglicht. Der Lagerring, beispielsweise ein äußerer Laufring eines Wälzlagers, wird erfindungsgemäß bei der Fertigung im Spritzgussverfahren durch Umspritzen mit dem Kunststoff in die Halterung integriert. Dazu wird der Laufring in der Kavität der Spritzgussform positioniert, die anschließend mit schmelzflüssigem Kunststoff gefüllt. Nach dem Auskühlen wird eine besonders haltbare stoffschlüssige Verbindung zwischen dem Kunststoff und dem Lagerring erzeugt, der bei einem Wälzlager üblicherweise aus Stahl besteht. Die Verbindung kann zusätzlich formschlüssig ausgestaltet werden, indem der Lagerring im Bereich seiner umspritzten Flächen Formschlusselemente aufweist, die beim Umspritzen von der Kunststoffschmelze eingeschlossen werden und formschlüssig in den Kunststoffkörper eingebettet sind. Die Formschlussselemente können beispielsweise durch eine Aufrauhung, Rändelung oder Riffelung erzeugt werden, oder durch andere, spanend oder nichtspanend eingebrachte Profilierungen.

Die erfindungsgemäße Umspritzung ermöglicht eine präzise Positionierung des Lagerrings in der Halterung, verbunden mit dem Vorteil eines geringeren Fertigungsaufwands verglichen mit der im Stand der Technik üblichen, nachträglichen Montage.

Ein weiterer Vorteil ist, dass die Verbindung eine höhere Festigkeit und Steifigkeit bietet als die im Stand der Technik bekannten Pressverbindungen. Darüber hinaus ist die Verbindung über die Lebensdauer der Lenkung langzeitstabil.

Bevorzugt kann der der Grundkörper als Exzenterhebel ausgebildet sein, der ein Schwenklager mit einer Schwenkachse aufweist, die einen Abstand zur Achse des Lagers hat. Ein derartiger Exzenter- oder Schwenkhebel ist über das Schwenklager drehbar an einem relativ zum Schneckenrad feststehenden Teil der Hilfskraftlenkung gelagert, und ermöglicht eine Schwenkbewegung um die Schwenkachse, wodurch der Lagerring und damit die in dem Lager gelagerte Schneckenwelle in Richtung auf die Verzahnung des Schneckenrads zu bewegbar ist.

Die Schwenkachse kann im Wesentlichen parallel zur Achse der Schneckenwelle angeordnet sein. Dadurch, dass die Lagerachsen von Schneckenwelle und Schwenklager quer zur Schneckenradachse, welche identisch sein kann mit der Lenkwellenachse, ausgerichtet sind, kann die Schneckenwelle im Wesentlichen parallel in den Verzahnungseingriff verlagert werden, wobei praktisch kein oder lediglich ein geringer Winkelversatz im Lager auftritt.

Es kann vorgesehen sein, dass das Schwenklager ein an den Grundkörper angespritztes Lagerelement aufweist. Das Lagerelement kann beispielsweise eine Lagerbohrung sein, die einstückig in dem als Spritzgussteil gefertigten Grundkörper ausgebildet sein kann. In der Lagerbohrung kann zur Bildung des Schwenklagers ein Lagerzapfen drehbar angeordnet sein. Der Lagerzapfen kann dabei direkt in dem Kunststoffmaterial des Grundkörpers gleitgelagert sein. Eine langfristig leichtgängige Lagerung kann beispielsweise durch einen Lagerzapfen aus Stahl oder NE-Metall oder Kunststoff erreicht werden, der in dem thermoplastischen Polymer des Grundkörpers gelagert ist, wodurch die Lagerbewegung durch die im Betrieb auftretenden geringfügigen Schwenkbewegungen langfristig verschleißarm und sicher gewährleistet ist. Alternativ ist es denkbar und möglich, ein zusätzliches Lagerelement, beispielsweise eine Lagerbuchse oder einen Lagerring eines Gleit- oder Wälzlagers aus einem von dem Kunststoff des Grundkörpers verschiedenen Material, an den Grundkörper anzuspritzen. Dies kann fertigungstechnisch wie beim Lagerring des Lagers der Schneckenwelle in einem Arbeitsgang im Spritzguss erfolgen.

Es ist vorteilhaft, dass zumindest ein Anspritzpunkt im Bereich zwischen dem Lager und dem Schwenklager angeordnet ist. Über die Lage des Anspritzpunktes kann beim Spritzguss die Füllung der Kavität beim Einspritzen der Kunststoffschmelze und dadurch die Ausbreitung der Fließfront vorgegeben werden, welche eine fertigungstechnische Optimierung der Werkstückeigenschaften des Kunststoffteils ermöglicht. Beim erfindungsgemäßen Grundkörper ist eine möglichst gleichmäßige Kunststofffüllung sowohl im Bereich des eingespritzten Lagerrings, als auch des Schwenklagers vorteilhaft. Diese kann durch ähnlich lange Fließwege bei der Befüllung über einen zwischen dem Lager und dem Schwenklager liegenden Anspritzpunkt erfolgen.

Der an den Grundkörper angespritzte Lagerring kann einen Außenring des als Wälzlager ausgebildeten Lagers bilden, welches zwischen dem Außenring und einem Innenring abwälzbar angeordnete Wälzkörper aufweist. Das Wälzlager kann als fertiges Bauelement bereitgestellt und als Ganzes umspritzt werden, so dass der Außenring mit dem Grundkörper verbunden wird.

Eine vorteilhafte Ausführung der Erfindung sieht vor, dass die Halterung einen nach außen vorstehenden Dämpferkörper aufweist, der aus einem von dem Kunststoff des Spritzgussteils verschiedenen Elastomer ausgebildet ist. Der Dämpferkörper ist außen an dem Grundkörper angeordnet, und kann beispielsweise bezüglich des Lagers radial nach außen vorstehen, zur Abstützung der Halterung an einem bezüglich der Schneckenwelle feststehenden Teil, beispielsweise an einem die Schneckenwelle und das Schneckenrad aufnehmenden Getriebegehäuse. Das Elastomer ist bevorzugt gummielastisch und weicher als das das Polymermaterial des Grundkörpers, und ermöglicht eine mechanisch gedämpfte Abstützung der Halterung. Dadurch können schädliche Vibrationen abgeschwächt werden, wodurch die Laufruhe erhöht wird.

Bevorzugt ist der Dämpferkörper an den Grundkörper angespritzt. Dadurch, dass der Dämpferkörper aus einem thermoplastischen Elastomer ausgebildet wird, kann er im Zweikomponenten-Spritzgussverfahren an den Grundkörper angespritzt werden. Dadurch wird auf rationelle Weise eine haltbare, stoffschlüssige Verbindung zwischen dem Grundkörper und dem Dämpferkörper erzeugt.

Dadurch, dass der Dämpferkörper in eine konkave Ausnehmung des Grundkörpers eingespritzt ist, ist eine präzise eindeutige relative Positionierung gewährleistet. Außerdem wird zusätzlich eine stabile und besonders haltbare formschlüssige Verbindung erzeugt.

Bevorzugt sind die Schneckenwelle und das Schneckenrad in einem Getriebegehäuse angeordnet, an dem die Halterung bewegbar gelagert ist. Das Getriebegehäuse dient zur relativen Lagerung der Getriebeelemente, hier der Schneckenwelle und dem damit in Eingriff stehenden Schneckenrad. Konkret kann die motorferne Lagerung der Schneckenwelle in dem Lager in der Halterung erfolgen, die beispielsweise als Schwenkhebel ausgebildet sein kann, der um die Schwenkachse schwenkbar an dem Getriebegehäuse angelenkt ist. Eine alternative oder zusätzliche Lagerung der Halterung am Getriebegehäuse ist ebenfalls denkbar und möglich, beispielsweise um eine zusätzliche Schwenkachse. Weiterhin kann das Getriebegehäuse eine motornahe Lagerung der Schneckenwelle umfassen, beispielsweise eine Wälzlagerung, und eine Aufnahme für den Elektromotor, der mit seiner Motorwelle koaxial zur Schneckenwelle an dem Getriebegehäuse angeflanscht sein kann. Das Schneckenrad ist vorzugsweise um die Lenkwellenachse drehbar in dem Getriebegehäuse gelagert.

An der Halterung kann ein Vorspannelement angreifen, welches die Halterung in Richtung auf das Schneckenrad elastisch vorspannt. Als Vorspannelement kann beispielsweise eine Feder eingesetzt werden, die sich an dem Getriebegehäuse abstützt und auf die Halterung wirkt, so dass ihre Federkraft das Lager der Schneckenwelle in Richtung auf das Schneckenrad elastisch belastet.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Hilfskraftlenkung für ein Kraftfahrzeug in einer schematischen perspektivischen Darstellung,
- Figur 2: der Antrieb der Hilfskraftlenkung gemäß Figur 1 in einer schematischen Darstellung und ohne Gehäuse,
- Figur 3: eine schematische Teilansicht der Hilfskraftlenkung gemäß Figur 2,
- Figur 4: eine Halterung der Hilfskraftlenkung gemäß der Figuren 1 bis 3 in einer Achsansicht in Richtung der Lagerachse,
- Figur 5: die Halterung der Hilfskraftlenkung gemäß der Figuren 1 bis 3 in einer entgegengesetzten Achsansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

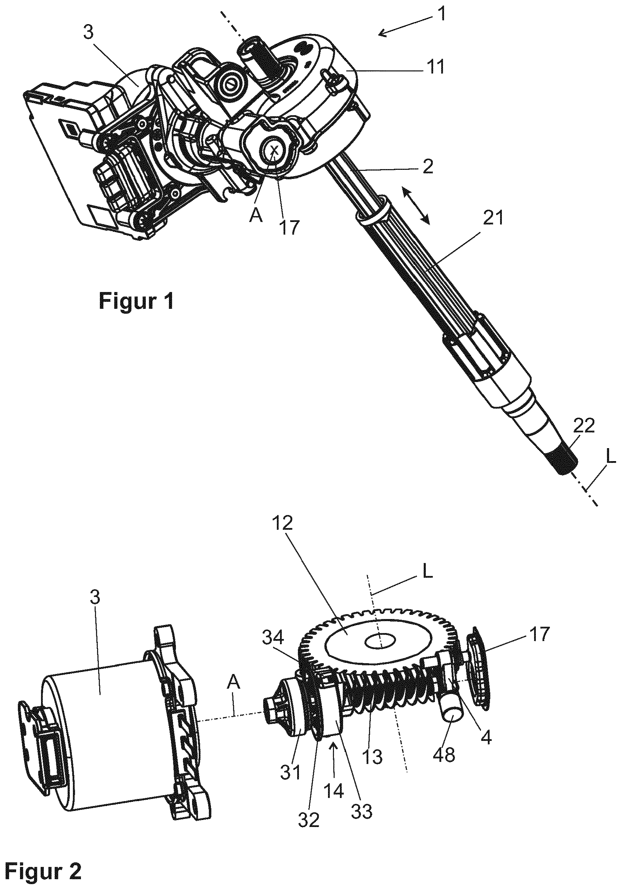

Figur 1 zeigt eine Hilfskraftlenkung 1, die an einer Lenkwelle 2 angebracht ist, welche um ihre Längsachse L, die Lenkwellenachse, drehbar gelagert ist. Die Lenkwelle 2 ist in einem hinteren Lenkwellenteil 21 drehfest, aber in Richtung der Längsachse L verstellbar, wie mit dem Doppelpfeil angedeutet, um ein an einem Befestigungsabschnitt 22 angebrachtes, hier nicht dargestelltes Lenkrad in Längsrichtung zu verstellen.

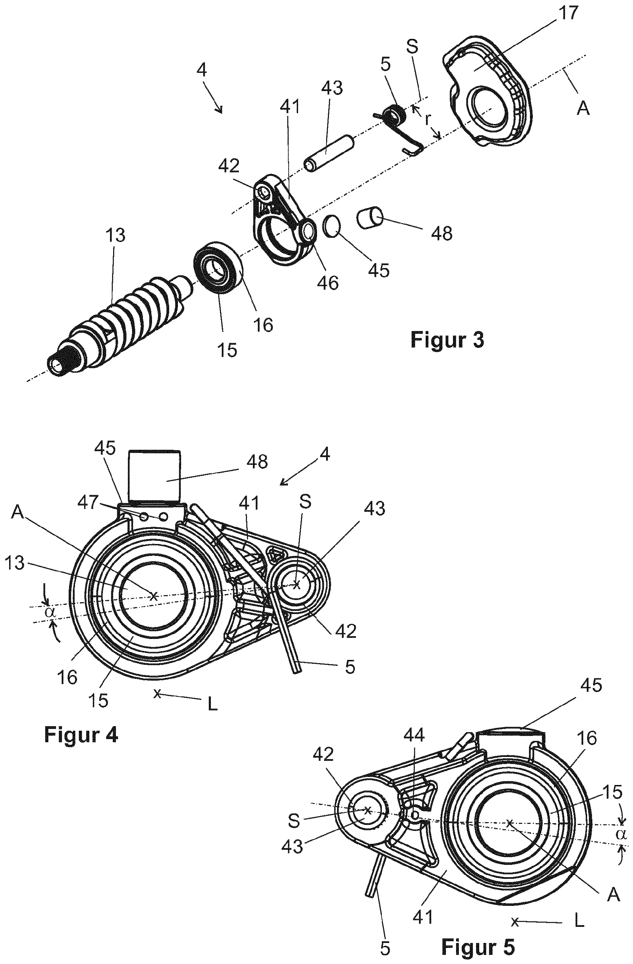

Die Hilfskraftlenkung weist ein Getriebegehäuse 11 auf, welches in der auseinander gezogenen Darstellung der Figuren 2 und 3 weggelassen ist. In dem Getriebegehäuse 11 ist ein Schneckenrad 12, welches drehfest mit der Lenkwelle 2 verbunden ist, um die Längsachse L drehbar gelagert. Eine Schneckenwelle 13 steht zur Bildung eines Schneckengetriebes mit dem Schneckenrad 12 in Verzahnungseingriff.

Die Schneckenwelle 13 ist in dem Getriebegehäuse 11 um eine Achse A, die Schneckenwellenachse, drehbar gelagert, und von einem an dem Getriebegehäuse 11 angeflanschten Elektromotor 3 drehend antreibbar. Der Elektromotor 3 verfügt über eine Motorwelle, die über eine Kupplung 31, welche aus zwei Kupplungsteilen besteht, mit der Schneckenwelle 13 drehfest gekoppelt ist. Dazu weist die Schneckenwelle 13 eine zylindrische Lagerbuchse auf, in die ein Kupplungsteil eingesetzt wird. Auf der motornahen Seite ist die Schneckenwelle 13 angrenzend zur Kupplung 31 in einem Lager 14 gelagert, bevorzugt einem Wälzlager, welches in dem Gehäuse 11 aufgenommen ist. Zwischen dem Getriebegehäuse 11 und der motornahen Lageranordnung 14 kann ein Dichtungselement 230 vorgesehen sein, welches einseitig der Lageranordnung 14 angrenzend zum Kupplungsteil oder beidseitig der Lageranordnung 14 ausgebildet ist. Das Wälzlager 14 umfasst einen Innenring, Wälzkörper und einem Außenring. Die Wälzkörper laufen in Rillen zwischen dem Innenring und dem Außenring. Der Außenring ist relativ zur Rotationsachse in einem Schwenkring 33 aufgenommen. Der Außenring weist außenumfangsseitig eine sphärische Fläche auf, die konvex gekrümmt ist und die eine Kontaktfläche zu einer Kontaktfläche an dem Schwenkring 33 bildet. Die Kontaktfläche des Schwenkrings 33 ist konkav gekrümmt, so dass der Außenring als schwenkbares Lagerelement in dem Schwenkring 33 um eine senkrecht zur Schneckenwellenachse A liegenden Schwenkachse schwenkbar ist. Die Schwenkachse verläuft im unbelasteten Zustand mittig durch die Lageranordnung 14, sodass zwei Federelemente 34 von der Schwenkachse 22 mittig durchsetzt werden. Dadurch erzeugen die Federelemente 34 somit nur geringe Kräfte, in einem Bereich kleiner 5% im Vergleich zu einer einstellbaren Vorspannung, beispielsweise über eine Vorspanneinrichtung an einer motorfernen Seite der Schneckenwelle 13. Am motorfernen Ende ist die Schneckenwelle 13 in einer Halterung 4 gelagert, die als Schwenkhebel ausgebildet und in den Darstellungen der Figuren 3 bis 5 näher erläutert ist.

Aus der Explosionsdarstellung von Figur 3 geht hervor, dass ein Lager 15 auf der motorfernen Seite der Schneckenwelle 13 angeordnet ist, welches bevorzugt als Wälzlager, beispielsweise als Rillenkugellager ausgebildet ist, und einen äußeren Lagerring 16 aufweist. Das Lager 15 ist relativ zum Schneckenrad 12 verlagerbar in der Halterung 4 angebracht.

Die Halterung 4 weist einen Grundkörper 41 auf, der als Spritzgussteil aus thermoplastischem Polymer ausgebildet ist. Der Lagerring 16 ist mit dem Grundkörper 41 durch Umspritzen verbunden, wie in den Figur 4 und 5 erkennbar ist, welche axiale Ansichten aus entgegengesetzten Achsrichtungen der Achse A zeigen.

In dem Grundkörper 41 der Halterung 4 ist ein Schwenklager 42 ausgebildet, mit einer in Richtung einer Schwenkachse S durchgehenden Lageröffnung. Die Schwenkachse S erstreckt sich mit einem Abstand r, dem Schwenkradius, im Wesentlichen parallel zur Achse A.

In dem Schwenklager 42 ist die Halterung 4 um einen Lagerzapfen 43 drehbar gelagert, der an einem mit dem Gehäuse verbundenen Lagerdeckel 17 angebracht ist. Dadurch kann das durch Umspritzen des Lagerrings 16 in dem Grundkörper 41 befestigte Lager 15, dessen Achse A im durch den Abstand r definierten Schwenkradius von der Schwenkachse S entfernt ist, durch Verschwenken um einen Schwenkwinkel α um die Schwenkachse S gegen die Längsachse L bewegt werden, wie in Figuren 4 und 5 dargestellt. Dadurch kann die Schneckenwelle 13 in Richtung des Verzahnungseingriffs mit dem um die Längsachse L drehbaren Schneckenrad 12 bewegt werden.

Auf dem Lagerzapfen 43 ist eine Feder 5 angeordnet, die als Schenkelfeder ausgebildet ist. Mit einem Schenkel stützt sich die Feder 5 an dem Getriebegehäuse 11 ab, der andere Schenkel liegt mit der Federkraft an der Halterung 4 an, und belastet den das Lager 15 aufnehmenden Arm des Schwenklagers in Richtung auf die Längsachse L zu. Dadurch wird die Schneckenwelle 13 elastisch spielfrei im Verzahnungeingriff mit dem Schneckenrad 12 belastet.

Der Lagerring 16 ist von dem thermoplastischen Polymer des Grundkörpers 41 umspritzt. Hierzu wird das Lager 15 in der Kavität einer Spritzgussform des Grundkörpers 41 angeordnet, in die über eine in einem Anspritzpunkt 44 angeordnete Düse die Kunststoffschmelze eingespritzt wird. Der Anspritzpunkt 44 ist, wie in Figur 5 deutlich erkennbar, in dem Grundkörper 41 zwischen dem Lagerring 16 und dem Schwenklager 42 angeordnet. beispielsweise etwa mittig, wie in der gezeigten Ausführung. Dadurch wird sichergestellt, dass der Lagerring 16 gleichmäßig mit dem Kunststoff umspritzt wird, und auch das Schwenklager 42 durch den kurzen Fließweg der Schmelze mit geringen Fertigungstoleranzen gespritzt werden kann.

Außen an dem Grundkörper 41 ist ein Dämpferkörper 45 angebracht. Dieser ist plan oder konvex, wie in Figur 5 dargestellt ausgebildet und ist senkrecht zur Schneckenwellenachse A ausgebildet.

Der Dämpferkörper 45 ist aus einem thermoplastischen Elastomer gefertigt, welches weicher und elastischer ist als das Polymer des Grundkörpers 41. Zur Verbindung mit dem Dämpferkörpers 45 weist der Grundkörper 41 eine konkave Ausnehmung 46 in Form eines zylindrischen Sacklochs auf. In der Wandung der Ausnehmung 46 sind im gezeigten Beispiel zwei Anspritzöffungen 47 angeordnet, durch die das Elastomermaterial zur Bildung des Dämpferkörpers 45 im Spritzguss schmelzflüssig eingespritzt wird. Dadurch wird der Dämpferkörper 45 stoff- und formschlüssig in der Ausnehmung 45 durch Anspritzen mit dem Grundkörper 41 verbunden. Der Dämpferkörper 45 wirkt mit einem im Wesentlichen zylindrischen Vorspannelement 48 aus einem Kunststoff zusammen. Das Vorspannelement 48 beaufschlagt über die Halterung 4 die Schneckenwelle 13 radial mit einer Vorspannkraft, wodurch die Schneckenwelle 13 in Richtung des Schneckenrad 12 gedrängt wird, was zur Verbesserung des Eingriffs zwischen Schneckenwelle 13 und Schneckenrad 12 beiträgt. Es ist denkbar und möglich, dass das Vorspannelement 48 direkt in die Ausnehmung 46 des Halters 4 eingespritzt wird und damit den Dämpferkörper ausbildet. Dieser ist im Wesentlichen zylindrisch ausgebildet und erstreckt sich von dem Grundkörper 41 bezüglich der Längsachse L radial nach außen, und zwar entgegengesetzt von der Längsachse L aus gesehen, wie in den Figur 4 schematisch eingezeichnet.

Im Einbauzustand stützt sich das Vorspannelement 48 entgegen der Richtung des Verzahnungseingriffs an dem Getriebegehäuse 11 ab, und sorgt durch eine zuverlässige Abschwächung von Vibrationen für eine hohe Laufruhe.

Durch den erfindungsgemäß mit dem Grundkörper 41 durch Anspritzen verbundenen Lagerring 16 wird eine langzeitstabile, steife Anbindung des Lagers 15 an die Halterung 4 erreicht. Der ebenfalls an die Halterung 4 angespritzte Dämpferkörper 45 ist über die gesamte Lebensdauer fest und sicher mit der Halterung verbunden.

### Bezugszeichenliste

- 1: Hilfskraftlenkung
- 11: Gehäuse
- 12: Schneckenrad
- 13: Schneckenwelle
- 14: Lager
- 15: Lager
- 16: Lagerring
- 17: Lagerdeckel
- 2: Lenkwelle
- 21: Lenkwellenteil
- 22: Befestigungsabschnitt
- 3: Elektromotor
- 31: Kupplung
- 32: Dichtungselement
- 33: Schwenkring
- 34: Federelement
- 4: Halterung
- 41: Grundkörper
- 42: Schwenklager
- 43: Lagerzapfen
- 44: Anspritzpunkt
- 45: Dämpferkörper
- 46: Ausnehmung
- 48: Vorspannelement
- 5: Feder
- L: Längsachse
- A: Achse (Schneckenwellenachse)
- S: Schwenkachse
- r: Abstand
- α: Schwenkwinkel

## Patentansprüche

1. Elektromechanische Hilfskraftlenkung (1) für ein Kraftfahrzeug, umfassend eine von einem Elektromotor (3) antreibbare Schneckenwelle (13), die mit einem mit einer Lenkwelle (2) gekoppelten Schneckenrad (12) kämmt, wobei die Schneckenwelle (13) in einem Lager (15) drehbar gelagert ist, welches zumindest einen in einer relativ zum Schneckenrad (12) verlagerbaren Halterung (4) angebrachten Lagerring (16) aufweist, wobei der Grundkörper (41) der Halterung (4) als Exzenterhebel ausgebildet ist, der ein Schwenklager (42) mit einer Schwenkachse (S) aufweist, die einen Abstand (r) zur Achse (A) des Lagers (15) hat,
**dadurch gekennzeichnet,**
**dass** die Halterung (4) einen Grundkörper (41) aus Kunststoff aufweist, welcher als Spritzgussteil an den Lagerring (16) angespritzt ist.

2. Hilfskraftlenkung (1) nach Anspruch 1, **dadurch gekennzeichnet, dass** die Schwenkachse (S) im Wesentlichen parallel zur Achse (A) der Schneckenwelle (13) angeordnet ist.

3. Hilfskraftlenkung (1) nach Anspruch 1, **dadurch gekennzeichnet, dass** das Schwenklager (42) ein an den Grundkörper (41) angespritztes Lagerelement aufweist.

4. Hilfskraftlenkung (1) nach Anspruch 1, **dadurch gekennzeichnet, dass** zumindest ein Anspritzpunkt (44) im Bereich zwischen dem Lager (15) und dem Schwenklager (42) angeordnet ist.

5. Hilfskraftlenkung (1) nach einem der vorangehenden Ansprüche, **dadurch gekennzeichnet, dass** der Lagerring (16) einen Außenring des als Wälzlager ausgebildeten Lagers (15) bildet.

6. Hilfskraftlenkung (1) nach einem der vorangehenden Ansprüche, **dadurch gekennzeichnet, dass** die Halterung (4) einen nach außen vorstehenden Dämpferkörper (45) aufweist, der aus einem von dem Kunststoff des Spritzgussteils verschiedenen Elastomer ausgebildet ist.

7. Hilfskraftlenkung (1) nach Anspruch 6, **dadurch gekennzeichnet, dass** der Dämpferkörper (45) an den Grundkörper (41) angespritzt ist.

8. Hilfskraftlenkung (1) nach Anspruch 7, **dadurch gekennzeichnet, dass** der Dämpferkörper (45) in eine konkave Ausnehmung (46) des Grundkörpers (41) eingespritzt ist.

9. Hilfskraftlenkung (1) nach einem der vorangehenden Ansprüche, **dadurch gekennzeichnet, dass** die Schneckenwelle (13) und das Schneckenrad (12) in einem Getriebegehäuse (11) angeordnet sind, an dem die Halterung (4) bewegbar gelagert ist.

10. Hilfskraftlenkung (1) nach einem der vorangehenden Ansprüche, **dadurch gekennzeichnet, dass** an der Halterung (4) ein Vorspannelement (5) angreift, welches die Halterung (4) in Richtung auf das Schneckenrad (12) elastisch vorspannt.

## Claims

1. An electromechanical power steering system (1) for a motor vehicle, comprising a worm shaft (13) which can be driven by an electric motor (3) and which meshes with a worm wheel (12) coupled to a steering shaft (2), wherein the worm shaft (13) is rotatably mounted in a bearing (15) which has at least one bearing ring (16) fitted in a retainer (4) that can be displaced relative to the worm wheel (12), wherein
the retainer (4) has a main body (41) of plastic, which is injection-molded onto the bearing ring (16) as an injection-molded part.

2. The power steering system (1) as claimed in claim 1, **characterized in that** the pivot axis (S) is arranged substantially parallel to the axis (A) of the worm shaft (13).

3. The power steering system (1) as claimed in claim 1, **characterized in that** the pivoting bearing (42) has a bearing element injection-molded onto the main body (41).

4. The power steering system (1) as claimed in claim 1, **characterized in that** at least one injection-molding point (44) is arranged in the region between the bearing (15) and the pivoting bearing (42).

5. The power steering system (1) as claimed in one of the preceding claims, **characterized in that** the bearing ring (16) forms an outer ring of the bearing (15) formed as a rolling bearing.

6. The power steering system (1) as claimed in one of the preceding claims, **characterized in that** the retainer (4) has a damper element (45) projecting outward, which is formed from an elastomer that is different from the plastic of the injection-molded part.

7. The power steering system (1) as claimed in claim 6, **characterized in that** the damper element (45) is injection-molded onto the main body (41).

8. The power steering system (1) as claimed in claim 7, **characterized in that** the damper element (45) is injection-molded into a concave recess (486) of the main body (41).

9. The power steering system (1) as claimed in one of the preceding claims, **characterized in that** the worm shaft (13) and the worm wheel (12) are arranged in a gear mechanism housing (11), on which the retainer (4) is movably mounted.

10. The power steering system (1) as claimed in one of the preceding claims, **characterized in that** a preloading element (5), which elastically preloads the retainer (4) in the direction of the worm wheel (12), acts on the retainer (4).

## Revendications

1. Direction assistée électromécanique (1) pour un véhicule automobile, comprenant un arbre à vis sans fin (13) pouvant être entraîné par un moteur électrique (3) et qui s'engrène avec une roue hélicoïdale (12) couplée avec un arbre de direction (2), l'arbre à vis sans fin (13) étant monté rotatif dans un palier (15) qui présente au moins une bague de palier (16) installée dans un support (4) déplaçable par rapport à la roue hélicoïdale (12), le corps de base (41) du support (4) étant réalisé sous forme de levier à excentrique qui présente un palier pivotant (42) doté d'un axe de pivotement (S) qui présente une distance (r) par rapport à l'axe (A) du palier (15),
**caractérisée en ce que** le support (4) présente un corps de base (41) en matière plastique qui est surmoulé sous forme de pièce moulée par injection sur la bague de palier (16).

2. Direction assistée (1) selon la revendication 1, **caractérisée en ce que** l'axe de pivotement (S) est disposé substantiellement en parallèle à l'axe (A) de l'arbre à vis sans fin (13).

3. Direction assistée (1) selon la revendication 1, **caractérisée en ce que** le palier pivotant (42) présente un élément de palier surmoulé sur le corps de base (41) .

4. Direction assistée (1) selon la revendication 1, **caractérisée en ce qu'**au moins un point d'injection (44) est disposé dans la zone entre le palier (15) et le palier pivotant (42).

5. Direction assistée (1) selon l'une quelconque des revendications précédentes, **caractérisée en ce que** la bague de palier (16) constitue une bague extérieure du palier (15) réalisé sous forme de palier à roulements.

6. Direction assistée (1) selon l'une quelconque des revendications précédentes, **caractérisée en ce que** le support (4) présente un corps amortisseur (45) faisant saillie vers l'extérieur et qui est réalisé en un élastomère différent de la matière plastique de la pièce moulée par injection.

7. Direction assistée (1) selon la revendication 6, **caractérisée en ce que** le corps amortisseur (45) est surmoulé sur le corps de base (41).

8. Direction assistée (1) selon la revendication 7, **caractérisée en ce que** le corps amortisseur (45) est injecté dans un évidement concave (46) du corps de base (41) .

9. Direction assistée (1) selon l'une quelconque des revendications précédentes, **caractérisée en ce que** l'arbre à vis sans fin (13) et la roue hélicoïdale (12) sont disposés dans un carter de boîte de vitesses (11) sur lequel le support (4) est monté mobile.

10. Direction assistée (1) selon l'une quelconque des revendications précédentes, **caractérisée en ce qu'**un élément de précontrainte (5) attaque au niveau du support (4) et applique au support (4) une précontrainte élastique en direction de la roue hélicoïdale (12).
